Europäisches Patentamt

**European Patent Office**

Office européen des brevets

(11) Publication number: **0 265 068**
**A2**

(12) # EUROPEAN PATENT APPLICATION

(21) Application number: **87308162.4**

(22) Date of filing: **16.09.87**

(51) Int. Cl.4: **B65D 85/00**

(30) Priority: **19.09.86 GB 8622648**

(43) Date of publication of application:
**27.04.88 Bulletin 88/17**

(84) Designated Contracting States:
**AT BE CH DE FR GB GR IT LI NL SE**

(71) Applicant: **Acrathane Products Limited**
**Straddlestones Lutterworth Road**
**Bramcote Nr.Nuneaton Warwickshire(GB)**

(72) Inventor: **Rogers, John c/o Acrathane**
**Products Limited**
**Straddlestones Lutterworth Road**
**Bramcote Nr. Nuneaton, Warwickshire(GB)**

(74) Representative: **Cowan, David Robert et al**
**WALFORD AND HARDMAN BROWN Trinity**
**House Hales Street**
**Coventry CV1 1NP West Midlands(GB)**

(54) **Package.**

(57) A package for cosmetic samplers is formed to enable samples 14 containing fatty materials to be provided. The package is made up from sheet material 10, 11 of paper which is normally pervious to the fatty materials. In order to package the cosmetic samples discrete areas 13, 15 of the sheet are each formed with a layer of impervious material. The cosmetic sample 14 is formed as a layer onto the impervious layer 13 and the sheet is folded on itself to form a cover 11. The underside of the cover sheet 11 is also provided with areas 15 of impervious material which lie over the cosmetic material 14, usually lipstick. Access to the cosmetic material is through openings 16 in the cover sheet. The impervious material may be channel-shaped to contain the cosmetic material.

**FIG.1**

## Package

This invention relates to a package for cosmetic samplers and to a method of making the package.

When using paper sheet or like material which is pervious to fatty materials for carrying or packaging the fatty materials it is necessary to find some means for preventing the fatty materials from migrating into the paper. However to substitute the paper material for non-pervious sheet material negates cost advantages of using relatively inexpensive paper sheet. To overcome this problem it has been proposed to apply a layer of impervious material to paper sheet, usually by laminating the paper sheet with the impervious layer, but such prior proposals have been directed to packaging food products such as butter in individual packages.

It has also been proposed to provide cosmetic samplers, that is small amounts of cosmetic products for sampling purposes, but hitherto it has not proved possible to package at least some kinds of cosmetic products in a manner and at a cost which makes such samplers viable commercially. In particular lipstick samplers have proved difficult to package economically, partly due to the nature of lipstick which includes fatty materials which would normally migrate into packaging made of paper with unsightly results. The previously proposed packaging for food products does not readily lend itself to the packaging of such cosmetic samplers which often require several different samples of different cosmetics to be located in the same package and which need to contain a small quantity of cosmetic in an inexpensive package since often the package will be provided at no cost to the user as a promotional item. Thus the production cost of the package has to be kept very low and the package made of low cost material.

It is an object of the invention to provide a package for cosmetic samples and a method of making the package which is adequate for the purpose.

According to one aspect of the invention in a method of making a cosmetic sampler package containing a fatty ingredient the method includes the steps of applying a layer of material selected from polyamide, polyester or other material which is impervious to the fatty ingredient to a sheet of material which is otherwise pervious to the fatty ingredient, applying onto the impervious layer a discrete area of cosmetic material containing the fatty ingredient so that the cosmetic material can remain on the layer without migration into the sheet of material, applying a sheet of pervious material over the cosmetic material so that the cosmetic material is between the sheets and the sheets define an upper and a lower sheet, the undersurface of the upper sheet having applied to it a layer of said impervious material over at least that area of the sheet positioned over the cosmetic material.

Preferably the impervious layers on the upper and lower sheets are applied over discrete areas of the sheets corresponding to the location of the discrete area of cosmetic material, and one or more discrete areas of the impervious layers carrying cosmetic material are applied to the upper and lower sheets.

Conveniently the upper sheet is formed with a removable cut out portion corresponding to the position of the discrete area of cosmetic material whereby access to the cosmetic material is through the cut out portion.

The upper and lower sheets may be an integral sheet which is formed into upper and lower sheets by folding the sheet on itself and the layers of impervious material may be applied hot to the associated sheet, dried and followed by a layer of the cosmetic material.

Alternatively the layers can be applied cold in which case drying of the layers may be by applying heat in an oven.

The cosmetic material, normally lipstick, may also be applied in hot form and extruded onto said layer.

In practice the sheet material may be progressed through stations at one of which the impervious layers are applied and at another, subsequent station the substance is applied to the dry impervious layer. Thus the individual sheets are progressed through the stations and the sheet is perforated, as necessary, for the forming of the cut out portions, and folded to form the upper and lower sheet portions.

According to another aspect of the invention a package for cosmetic samplers comprises upper and lower sheets of material pervious to fatty material, the upper side of the lower sheet and the lower side of the upper sheet each having a layer of material impervious to the fatty material, the impervious material being selected from polyamide, polyester or other impervious material, and cosmetic material containing the fatty material applied in a layer to a discrete area of the impervious layer on the lower sheet so that the cosmetic material forms a sandwich between the impervious layers on the upper and lower sheets without migration into the pervious sheet material.

The cosmetic material may be located in two or more discrete areas of the sheets, each area containing a different cosmetic material.

Preferably the upper sheet contains a removable cut out portion located over the discrete area of cosmetic material whereby access to the cosmetic material is obtained and the upper and lower sheets are an integral unit, the upper sheet being folded over the lower sheet.

Conveniently the layer of impervious material on the lower sheet is of channel cross-section, the layer of cosmetic material being located within the channel on said layer.

Further features of the invention appear from the following description of embodiments of the invention given by way of example only and with reference to the drawings in which:

Fig. 1 is a diagrammatic perspective view of one embodiment,

Fig. 2 is a cross-section on the line 2-2 in Fig. 1;

Fig. 3 is a diagrammatic perspective view of a second embodiment of package, and

Fig. 4 is a laid flat view of the embodiment of Fig. 3.

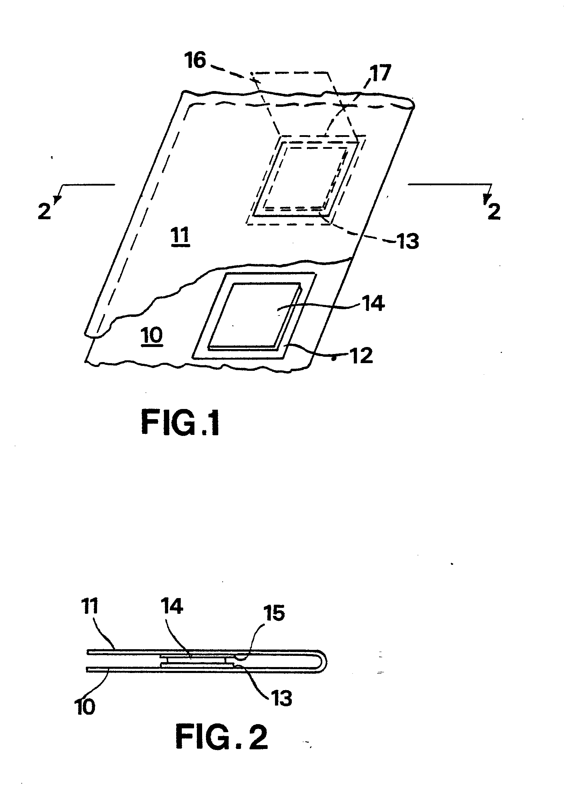

Referring to the drawings and firstly to Figs. 1 and 2 an assembled package is shown which consists of a sheet of paper or other material pervious to fatty material. The sheet is folded over to provide a lower sheet 10 and an upper sheet 11. The lower sheet 10 is applied with, in this case two, discrete areas 12 and 13 of an impervious layer of polyamide or polyester material. The areas 12 and 13 of impervious material are each applied with a layer 14 of lipstick or other similar fat-containing substance. Normally a different area 12 or 13 is applied with a different lipstick or other material for example lipsticks of different colours.

The upper sheet 11 covers the lipstick layers 14 and, over the areas of the sheet 11 coinciding with the areas 12 and 13, the upper sheet 11 bears on its underside a discrete layer 15 (only one of which is seen) of the impervious material whereby said layer 15 is of a size to cover the respective layer of substance 14. The upper sheet 11 is formed with perforations defining cut-out portions 16 (only one of which is seen) each hinged at 17 along one edge so that the portion may be lifted up about the hinge 17 to gain access to the substance 14 in the respective area 12 or 13.

The layers 12, 13; 15 of impervious material are selected to be impervious to the substance in the layer 14 so that the substance can not migrate into the sheets 10 and 11. If the sheets are of paper and the substance is lipstick containing fats the fats would normally migrate into the paper. But if the material in the layers of the areas 12, 13 and 15 is selected from polyamide, polyester or other suitable materials resistant or impervious to fats the fats are unable to migrate into the paper. Preferably if polyamide or polyester is used it is applied in hot melt form so that it dries rapidly upon application to the paper.

In the Figs. 1 and 2 embodiment the impervious layers are preferably of greater area than that of the substance 14 so that there is no risk of the substance reaching the part of the paper having no protective impervious layer.

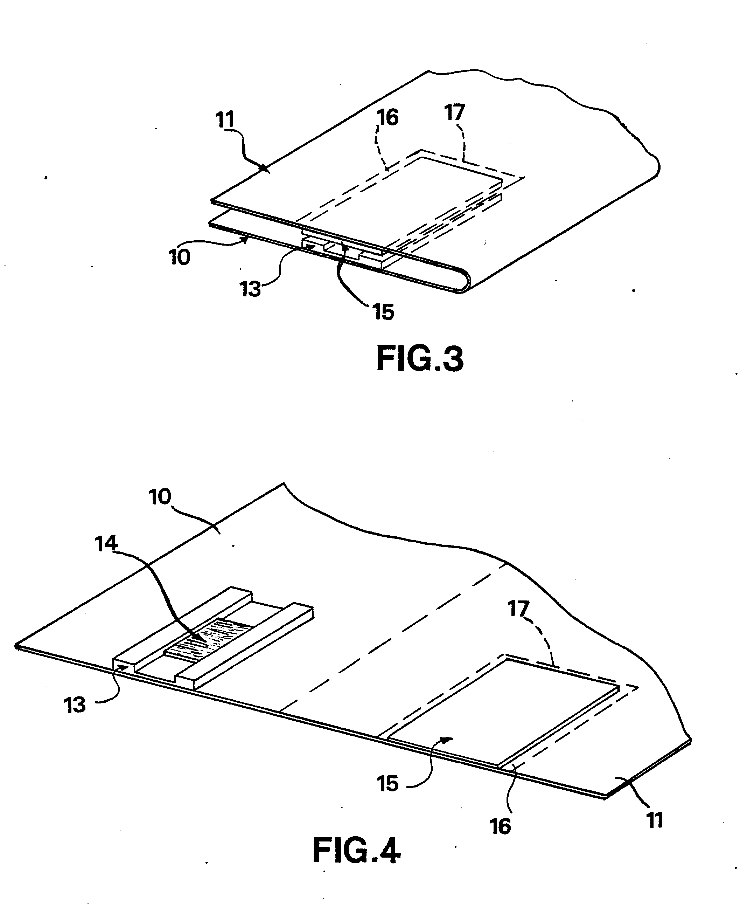

Referring now to Figs. 3 and 4 a similar package to that of Figs. 1 and 2 is shown and the same reference numbers are used in both embodiments for equivalent parts. Thus the package is formed of an integral sheet of paper or like pervious material but in the present case the or each layer 12 on the lower sheet 10 is formed with a channel-section profile having two raised longitudinal edges between which is located the layer 14 of lipstick or other cosmetic material containing fatty material. The layer 14 terminates short of the ends of the channel-section layer 12 to avoid the possibility of the layer 14 migrating onto and into the underlying paper sheet 10.

The Fig. 3 and 4 arrangement is similarly provided with an upper sheet 11 on which is formed a further area of impervious material at 15 to overlie the layer 14 when the upper sheet 11 is folded over the lower sheet 10, as shown in Fig. 3. Furthermore the upper layer is perforated around the layer 15 to define a cut-out portion 16 which gives access to the cosmetic material 14 in the package during use. The portion 16 may be hinged at 17 as before.

Although only one area of cosmetic material 14 is shown in the Figs. 3 and 4 embodiment it will be appreciated that the package may be formed with two or more areas each with a different cosmetic product, for example lipstick of different colours. Other cosmetic products, not requiring the provision of impervious layers, may be carried in the package in a similar manner at different positions each having an associated access opening (not shown).

It will also be understood that the thickness of the layers 12, 13, 14 and 15 as shown in the drawings are for illustration purposes only and the layers 12, 13 and 15, in particular, may be in the nature of a film of impervious material.

The illustrated packages may be formed by progressing the sheet of paper, opened flat, through stations at which the discrete impervious areas are formed with layers which are applied simultaneously or successively, followed by a station at which the cosmetic substance is applied to the discrete areas of impervious layers. The paper is then folded over on itself so that the other discrete impervious layer lies over the layer of the substance. The sheet may be printed on its various surfaces before applying the various layers of impervious or cosmetic material.

The substance forming the impervious layers is dispensed hot or cold from a dispenser closely adjacent the path of the paper and the fat-containing substance is similarly extruded from a dispenser, the dispensers being of known form to dispense a discrete amount of material over a predetermined area of paper in a predetermined thickness.

## Claims

1. In a method of making a cosmetic sampler package containing a fatty ingredient the method is characterised by the steps of applying a layer of material 13 selected from polyamide, polyester or other material which is impervious to the fatty ingredient to a sheet 10 of material which is otherwise pervious to the fatty ingredient, applying onto the impervious layer a discrete area 14 of cosmetic material containing the fatty ingredient so that the cosmetic material can remain on the layer 13 without migration into the sheet 10 of material, applying a sheet 11 of pervious material over the cosmetic material so that the cosmetic material 14 is between the sheets 10, 11 and the sheets define an upper and a lower sheet, the undersurface of the upper sheet 11 having applied to it a layer 15 of said impervious material over at least that area of the sheet positioned over the cosmetic material 14.

2. A method according to claim 1 characterised in that the impervious layers 13, 15 on the lower and upper sheets 10, 11 are applied over discrete areas of the sheets corresponding to the location of the discrete area of cosmetic material 14, and two or more discrete areas of the impervious layers carrying cosmetic material are applied to the upper and lower sheets 10, 11.

3. A method according to claim 1 or 2 characterised in that the upper sheet 11 is formed with a removable cut out portion 16 corresponding to the position of the discrete area of cosmetic material 14 whereby access to the cosmetic material is through the cut out portion 16.

4. A method according to claim 1, 2 or 3 characterised in that the upper and lower sheets 11, 10 are an integral sheet which is formed into upper and lower sheets by folding the sheet on itself.

5. A method according to any one of claims 1-4 characterised in that the layers of impervious material 13, 15 are applied hot to the associated sheet 10, 11, dried and followed by a layer 14 of the cosmetic material.

6. A package for cosmetic samplers characterised by upper and lower sheets 11, 10 of material pervious to fatty material, the upper side of the lower sheet 10 and the lower side of the upper sheet 11 each having a layer 13, 15 of material impervious to the fatty material, the impervious material being selected from polyamide, polyester or other impervious material, and cosmetic material 14 containing the fatty material applied in a layer to a discrete area of the impervious layer 13 on the lower sheet 10 so that the cosmetic material forms a sandwich between the impervious layers 13, 15 on the upper and lower sheets without migration into the pervious sheet material 10, 11.

7. A package according to claim 6 characterised in that the cosmetic material 14 is located in two or more discrete areas of the sheets 10, 11, each area containing a different cosmetic material.

8. A package according to claim 6 or 7 characterised in that the upper sheet 11 contains a removable cut out portion 16 located over the discrete area of cosmetic material 14 whereby access to the cosmetic material is obtained.

9. A package according to claim 6, 7 or 8 characterised in that the upper and lower sheets 11, 10 are an integral unit, the upper sheet being folded over the lower sheet.

10. A package according to any one of claims 6 to 9 wherein the layer 13 of impervious material on the lower sheet 10 is of channel cross-section, the layer 14 of cosmetic material being located within the channel on said layer.

16 ～

17

2

11

13

10

14

12

**FIG.1**

11    14    15

10    13

**FIG.2**

FIG.3

FIG.4